Europäisches Patentamt

European Patent Office

Office européen des brevets

(19)

(11) **EP 0 948 121 B1**

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(51) Int Cl.⁷: **H02M 1/12**, H02M 7/48

(21) Anmeldenummer: **99810218.0**

(22) Anmeldetag: **11.03.1999**

(54) **Lastseitige Filteranordnung für eine Stromrichter-Schaltungsanordnung**

Load side filter arrangement for a power converter circuit

Dispositif de filtrage pour un circuit convertisseur de puissance

(84) Benannte Vertragsstaaten:
**DE FR GB IT**

(30) Priorität: **30.03.1998 DE 19814059**

(43) Veröffentlichungstag der Anmeldung:
**06.10.1999 Patentblatt 1999/40**

(73) Patentinhaber: **ABB Schweiz AG**
**5400 Baden (CH)**

(72) Erfinder: **Wild, Gerhard**
**5400 Baden (CH)**

(74) Vertreter: **ABB Patent Attorneys**
**c/o ABB Schweiz AG**
**Brown Boveri Strasse 6**
**5400 Baden (CH)**

(56) Entgegenhaltungen:
**EP-A- 0 829 948**

• KIM S -J ET AL: "A NOVEL FILTR DESIGN FOR SUPPRESSION OF HIGH VOLTAGE GRADIENT IN VOLTAGE-FED PWM INVERTER" APEC. ANNUAL APPLIED POWER ELECTRONICS CONFERENCE AND EXPOSITION,US,NEW YORK, IEEE, Bd. CONF. 12, 1997, Seiten 122-127, XP000736180 ISBN: 0-7803-3705-0

## Beschreibung

### Technisches Gebiet

Die Erfindung bezieht sich auf das Gebiet der Leistungselektronik. Sie geht aus von einer lastseitigen Filteranordnung für eine Stromrichterschaltungsanordnung gemäss dem Oberbegriff des ersten Anspruchs. Eine gattungsgemässe Filteranordnung ist schon in den Europäischen Patentanmeldungen EP 0 682 401 A1 und EP 0 682 402 A1 beschrieben, wobei zudem eine Filteranordnung gemäss dem Oberbegriff des Anspruchs 1 in der EP 0 829 948 A2 offenbart ist.

### Stand der Technik

In der obengenannten Schrift EP 0 682 402 A1 ist ein mittels Widerständen verlustbehafteter LC-Tiefpass zwischen die Lastanschlüsse und eine Last eingefügt. Die Anschlüsse der Kondensatoren können entweder zu einem Sternpunkt zusammengeführt werden oder mit dem Plus- bzw. Minusanschluss des Zwischenkreises verbunden sein. Die in den obengenannten Schriften gezeigten Filteranordnungen werden vorzugsweise für Niederspannungsanwendungen eingesetzt. Aus der EP 0 318 790 ist zudem ein Hochpass einer Filteranordnung für eine mit Stromrichtern verbundene Leitung bekannt.

Ziel eines lastseitigen Filters ist es, eine möglichst sinusförmige Ausgangsspannung zu erzielen. Ein Weg wäre nun, das Filter möglichst gross auszulegen. Dies bringt jedoch einige gewichtige Nachteile mit sich: Bei einem Kurzschluss des Filterkondensators entlädt sich der betroffene und alle parallelgeschalteten Kondensatoren in den Kurzschluss. Ausserdem können durch den Kurzschluss grosse Drehmomentsprünge am angeschlossenen Motor und hohe Überspannungen an den Motorwicklungen und Filterkondensatoren auftreten. Als Folgefehler können weitere Kurzschlüsse auftreten, so dass eine grosse Energie schlagartig frei wird, was Zerstörungen nach sich ziehen kann. Je grösser die Filterkapazität gewählt wird, desto grösser ist die Energie, die in einer defekten Filterkanne vernichtet werden muss. Dadurch kann die Filterkanne zerplatzen, Isolationsöl kann austreten und die Umwelt verschmutzten.

### Darstellung der Erfindung

Aufgabe der vorliegenden Erfindung ist es, eine Filteranordnung für eine Stromrichterschaltungsanordnung anzugeben, bei welcher die zerstörerischen Folgen eines Kondensatorkurzschlusses auf ein Minimum begrenzt bzw. ganz vermieden werden können.

Diese Aufgabe wird bei einer n-phasigen Stromrichterschaltungsanordnung der eingangs genannten Art durch die Merkmale des ersten Anspruchs gelöst.

Kern der Erfindung ist es also, die Kondensatoren des lastseitigen Filters in mindestens zwei n-phasige Kondensatorgruppen zusammenzufassen und die eine Kondensatorgruppe hart und die andere hochohmig über einen Erdungswiderstand zu erden. Bei einem Kurzschluss einer Filterkapazität fällt dadurch nur die Kapazität der defekten Kondensatorgruppe weg. Die anderen Kondensatoren sehen weiterhin die normale Phasenspannung und entladen sich somit solange $\frac{1}{\omega \cdot C_f} << R_e$ (Cf = Filterkapazität, Re = Erdungswiderstand) nicht. Ausserdem treten nach dem Kondensatorkurzschluss keine Überspannungen auf, und der Motor bzw. die Last erfährt ebenfalls keine Überspannungen. Ein Weiterbetrieb der Anlage nach dem Kurzschluss ist grundsätzlich möglich. Gleiches gilt für einen einphasigen Motorerdschluss. Bei motorseitigem Erd- und Klemmenkurzschluss wird der Kurzschlussstrom begrenzt, und es treten keine Gleichtakt-Spannungen am Motor auf. Als Erdungswiderstand können Standardwiderstände eingesetzt werden. Auch bei mehreren parallelgeschalteten Kondensatorgruppen ist je nach Energieinhalt der Kondensatorgruppen nur ein Erdungswiderstand nötig. Vorzugsweise werden die Kondensatorgruppen jeweils von einer Filterkanne umschlossen.

### Kurze Beschreibung der Zeichnungen

Nachfolgend wird die Erfindung anhand von Ausführungsbeispielen im Zusammenhang mit den Zeichnungen näher erläutert.

Es zeigen:

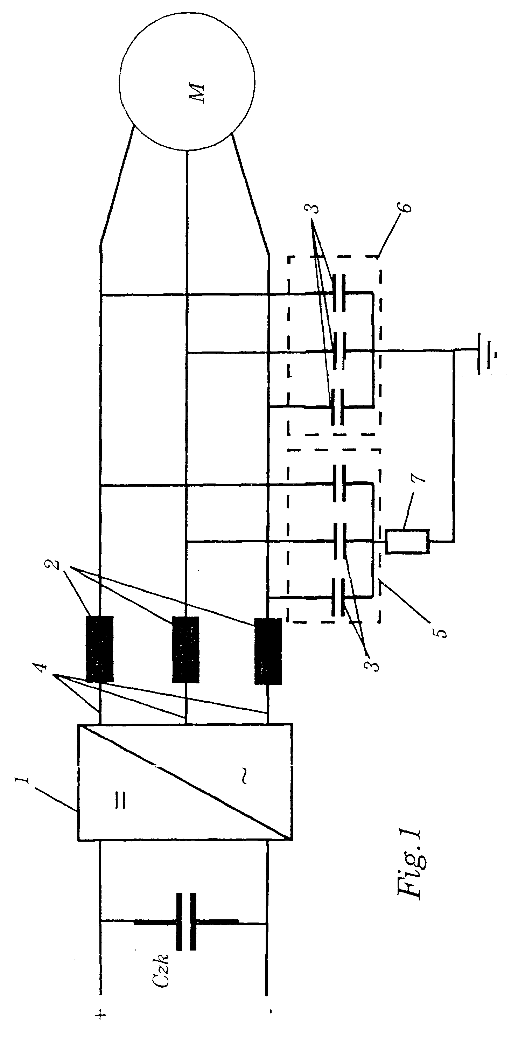

**Fig.** 1    Ein Ausführungsbeispiel des erfindungsgemässen Schaltungsaufbaus.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

Figur 1 zeigt ein Ausführungsbeispiel der Erfindung. Mit 1 ist eine leistungselektronische Schaltungsanordnung, insbesondere ein Wechselrichter, bezeichnet, der von einem Gleichspannungszwischenkreis, dargestellt durch den Zwischenkreiskondensator Czk und den Plus- und Minuspol +/-, gespeist wird. Der Wechselrichter 1 wandelt die Gleichspannung in eine Wechselspannung variabler Amplitude und Frequenz um. Diese Wechselspannung speist eine Last, zum Beispiel einen Motor M. Damit möglichst sinusförmige Ausgangsgrössen erreicht werden, ist ein lastseitiges Filter vorgesehen, das zwischen die Lastanschlüsse 4 des Wechselrichters 1 und die Last M geschaltet ist. Das Filter umfasst im wesentlichen eine LC-Glied mit pro Phase einer Serieinduktivität 2 und einem Kondensator 3.

Nach der Erfindung sind nun pro Phase zwei Kondensatoren 3 vorgesehen und je einer ist einer der beiden Kondensatorgruppen 5 und 6 zugeordnet. Allgemein werden somit für eine n-phasige Schaltung mindestens zwei n-phasige Kondensatorgruppen gebildet. Die beiden Kondensatorgruppen 5 und 6 umfassen folglich je drei Kondensatoren, die z.B. in Öl getaucht gehalten und vorzugsweise von einer Kanne umschlossen werden. Die Kondensatoren 3 einer Kondensatorgruppe sind jeweils in Stern geschaltet. Kern der Erfindung ist es nun, die Kondensatoren der einen Kondensatorgruppe hart, d.h. ohne Zwischenschalten eines Erdungswiderstandes und diejenigen der anderen Kondensatorgruppe hochohmig über einen Erdungswiderstand 7 zu erden.

**Bezugszeichenliste**

| | |
|---|---|
| 1 | Stromrichterschaltungsanordnung |
| 2 | Serieinduktivität |
| 3 | Kondensator |
| 4 | Lastanschluss |
| 5 | erste Kondensatorgruppe |
| 6 | zweite Kondensatorgruppe |
| Czk | Zwischenkreiskondensator |
| M | Motor, Last |
| + | Plusanschluss |
| - | Minusanschluss |

**Patentansprüche**

1. Filteranordnung, die lastseitig an eine Stromrichterschaltungsanordnung ( 1 ) angeschlossen ist, wobei die Stromrichterschaltungsanordnung (1) n-phasig aufgebaut ist und n Lastanschlüsse (4) umfasst, an welchen die Filteranordnung, die pro Lastanschluss mindestens eine Serieninduktivität (2) umfasst, angeschlossen ist, wobei die Filteranordnung mindestens eine erste n-phasige Kondensatorgruppe (6) aufweist, in der pro Lastanschluss (4) jeweils mindestens ein Kondensator (3) angeordnet ist und die Kondensatoren (3) dieser Kondensatorgruppe (6) in Sternschaltung geschaltet sind und der Sternpunkt dieser Kondensatorgruppe (6) hart geerdet ist, **dadurch gekennzeichnet, dass**

   (a) die Filteranordnung mindestens eine weitere n-phasige und zur mindestens ersten Kondensatorgruppe (6) parallel geschaltete Kondensatorgruppe (5), in der pro Lastanschluss (4) jeweils mindestens ein Kondensator (3) angeordnet ist, umfasst, und dass
   (b) die Kondensatoren (3) der mindestens einen weiteren n-phasigen Kondensatorgruppe (5) in Sternschaltung geschaltet sind und der Stempunkt dieser Kondensatorgruppe (5) über einen Erdungswiderstand (7) geerdet ist

2. Filteranordnung nach Anspruch 1, **dadurch gekennzeichnet, dass** die Kondensatoren (3) einer Kondensatorgruppe (5, 6) jeweils von einer Kanne umschlossen werden.

**Claims**

1. Filter arrangement which is connected on the load side to a converter circuit arrangement (1), in which case the converter circuit arrangement (1) has n phases and comprises n load connections (4) to which the filter arrangement is connected, which filter arrangement comprises at least one series inductance (2) per load connection, the filter arrangement having at least one first n-phase capacitor group (6), in which in each case at least one capacitor (3) is arranged per load connection (4), and the capacitors (3) in this capacitor group (6) are connected in star, and the star point of this capacitor group (6) is hard-grounded, **characterized in that**

   (a) the filter arrangement comprises at least one further n-phase capacitor group (5) in which in each case at least one capacitor (3) is arranged per load connection (4); which is connected in parallel to the at least first capacitor group (6) and **in that**
   (b) the capacitors (3) in the at least one further n-phase capacitor group (5) are connected in star, and the star point of this capacitor group (5) is grounded via a grounded resistor (7).

2. Filter arrangement according to Claim 1, **characterized in that** the capacitors (3) in one capacitor group (5, 6) are each enclosed by a can.

**Revendications**

1. Agencement de filtrage connecté du côté de la charge à un agencement (1) de circuit convertisseur de courant, l'agencement (1) de circuit convertisseur de courant présentant n phases et comprenant n connexions (4) de charge auxquelles est connecté l'agencement de filtrage qui comprend au moins une inductance série (2) pour chaque connexion de charge, l'agencement de circuit convertisseur de courant présentant au moins un groupe (6) de condensateurs à n phases dans lequel ou lesquels au moins un condensateur (3) est agencé pour chaque connexion (4) de charge, les condensateurs (3) de ce groupe (6) de condensateurs étant montés en étoile et le point neutre de ce groupe (6) de condensateurs étant raccordé fixement à la terre, **caractérisé en ce que** :

(a) l'agencement de filtrage comprend au moins un autre groupe (5) de condensateurs à n phases qui est monté en parallèle à au moins un premier groupe (6) de condensateurs et dans lequel au moins un condensateur (3) est agencé pour chaque connexion (4) de charge et **en ce que**

(b) les condensateurs (3) du ou des autres groupes (5) de condensateurs sont montés en étoile, le point neutre de ce ou de ces groupes (5) de condensateurs étant relié à la terre par l'intermédiaire d'une résistance (7) de mise à la terre.

2. Agencement de filtrage selon la revendication 1, **caractérisé en ce que** chacun des condensateurs (3) d'un groupe (5, 6) de condensateurs est contenu dans une cuve.

Fig.1